# EUROPÄISCHE PATENTANMELDUNG

(11) **EP 1 777 542 A1**
(43) Veröffentlichungstag der Anmeldung: **25.04.2007**
(21) Anmeldenummer: 06119188.8
(22) Anmeldetag: 18.08.2006
(51) Int. Cl.: G01S 7/03, G01S 13/44, G01S 13/48

(54) **Bewegungssensor sowie Verfahren zu seinem Betrieb**

(30) Priorität: 18.10.2005 DE 102005049772
(71) Anmelder: ROBERT BOSCH GMBH, 70442 Stuttgart (DE)
(72) Erfinder: Schoeberl, Thomas, 31139 Hildesheim (DE); Focke, Thomas, 31180 Ahrbergen (DE); Hansen, Thomas, 31139 Hildesheim (DE); Schneider, Martin, 31139 Hildesheim (DE); Schoebel, Joerg, 38226 Salzgitter (DE); Gross, Volker, 71254 Ditzingen (DE); Brueggemann, Oliver, 31241 Ilsede (DE)

(57) **Zusammenfassung**

Bei einem Bewegungssensor zur elektromagnetischen Erfassung der Bewegung eines Objektes, insbesondere zur Erfassung einer Winkelposition des zu erfassenden Objektes (115) relativ zum Standort und/oder zur Ausrichtung des Bewegungssensors (120), mit einem aus wenigstens einer Sendeantenne (100) und wenigstens einer Empfangsantenne (105, 110) gebildeten Antennenfrontend, ist insbesondere vorgesehen, dass das Antennenfrontend durch wenigstens zwei Sendeantennen (410, 415) zur Abstrahlung wenigstens zweier elektromagnetischer Wellen, durch wenigstens eine Empfangsantenne (400) zur Detektion wenigstens einer von dem zu erfassenden Objekt (115) reflektierten elektromagnetischen Welle (200, 225) und durch Umschaltmittel (420) zur Umschaltung des Betriebs zwischen den wenigstens zwei Sendeantennen (410, 415) gebildet ist.

## Beschreibung

### Stand der Technik

Die Erfindung betrifft einen Bewegungssensor und ein Verfahren zu seinem Betrieb gemäß den Oberbegriffen der jeweiligen unabhängigen Ansprüche.

Bei einem hier betroffenen und beispielsweise in der DE 102 34 291A1 beschriebenen Bewegungssensor werden häufig nach dem Dopplerprinzip arbeitende Radarsensoren eingesetzt, welche im Mikrowellenbereich betrieben werden. Im einfachsten Fall weisen diese Sensoren eine Hochfrequenz (HF)-Dauerstrichquelle auf, deren Ausgangssignal zwischen einer ersten Antenne, der Sendeantenne, und dem Lokaloszillator (LO)-Eingang eines Mischers aufgeteilt wird. Häufig ist die Dauerstrichquelle abschaltbar, womit aber keine Modulation des Signals sondern nur ein Abschalten während inaktiver Perioden des Sensorbetriebs realisiert wird. Das Signal einer zweiten Antenne, der Empfangsantenne, wird dem Signaleingang des Mischers zugeführt. Am Ausgang des Mischers wird das Dopplersignal abgegriffen. Die Dopplerfrequenz Δf ist für ein Radarsignal, d. h. des vom ruhenden Radarsystem abgestrahlten und am bewegten Objekt zum Radarsystem zurück reflektierten Signals, durch die Gleichung Δf=2vf/c gegeben, in welcher c die Lichtgeschwindigkeit, f die Frequenz des Radarsignals und v die radiale Geschwindigkeit des Zielobjekts darstellen. Ein positiver Wert von Δf bedeutet eine Bewegung des bewegten Objektes in Richtung des Radarsystems, ein negativer Wert hingegen eine Bewegung vom Radarsystem weg.

Soll eine Erkennung der Bewegungsrichtung des Zielobjekts auf den Radarsensor zu oder vom Radarsensor weg erfolgen, so müssen ein Mischer, der In-Phase- und Quadraturkomponente (IQ) des Mischprodukts liefert (sog. "IQ-Mischer") und eine "Einseitenband"-Signalverarbeitung verwendet werden. In einer digitalen Auswerteeinheit kann man wiederum bekanntermaßen die Fouriertransfomierten der digitalisierten In-Phase- und Quadratur-Komponenten des mit dem Lokaloszillator einer vorgegebenen Frequenz gemischten Eingangssignals bilden und daraus das resultierende "Einseitenband'-Spektrum bilden.

Die Sensitivität des Radarsensors ist am größten für radiale Bewegungen und verringert sich auf null für tangentiale Bewegungen, wobei nur sich bewegende Objekte erkannt werden. Dieses Verhalten ist für einen Bewegungssensor prinzipiell erwünscht, damit statische Ziele (vor allem Radarziele) systembedingt ausgeblendet werden. Allerdings muss die untere Geschwindigkeitsgrenze, ab der bewegte Objekte erkannt werden, relativ gering sein, damit nicht ein Eindringen in den Überwachungsbereich aufgrund einer sehr langsamen Bewegung möglich ist.

Gegenüber den beschriebenen Radarsensoren kommen in den hier betroffenen Bewegungssensoren auch sog. Passiv-Infrarot-(PIR-)Sensoren zum Einsatz, welche einen pyroelektrischen Kristall aufweisen, der eine temperaturabhängige spontane elektrische Polarisation zeigt. Die von dem zu detektierenden Objekt abgestrahlte Infrarotstrahlung, die sich im Allgemeinen von der thermischen Emission des Hintergrunds unterscheidet, wird üblicherweise durch eine Kunststofflinse auf den pyroelektrischen Kristall fokussiert. Dadurch wird eine Änderung der Temperatur des Kristalls hervorgerufen, wenn sich das Objekt im Erfassungsbereich befmdet. Da die Polarisation des pyroelektrischen Kristalls schon nach kurzer Zeit von einer äußeren Ladung (z.B. Ionen aus der Luft) kompensiert wird, können mit einem pyroelektrischen Kristall nur kurzzeitige Temperaturänderungen detektiert werden. In einem PIR-Bewegungssensor wird daher vor den pyroelektrischen Kristall eine Anordnung von Infrarot-Linsen oder Infrarot-Spiegeln angeordnet, so dass mehrere auf den Kristall fokussierte Strahlkeulen ausgebildet werden und zwischen den Strahlkeulen "blinde" Bereiche auftreten. Durchquert ein Objekt oder eine Person die Strahlkeulen mit den dazwischen befindlichen "blinden" Bereichen, wird am Ausgang des PIR-Bewegungssensors ein Wechselspannungssignal erzeugt. Dementsprechend ist die Sensitivität des PIR-Bewegungssensors am größten für tangentiale Bewegungen und verringert sich auf Null für radiale Bewegungen.

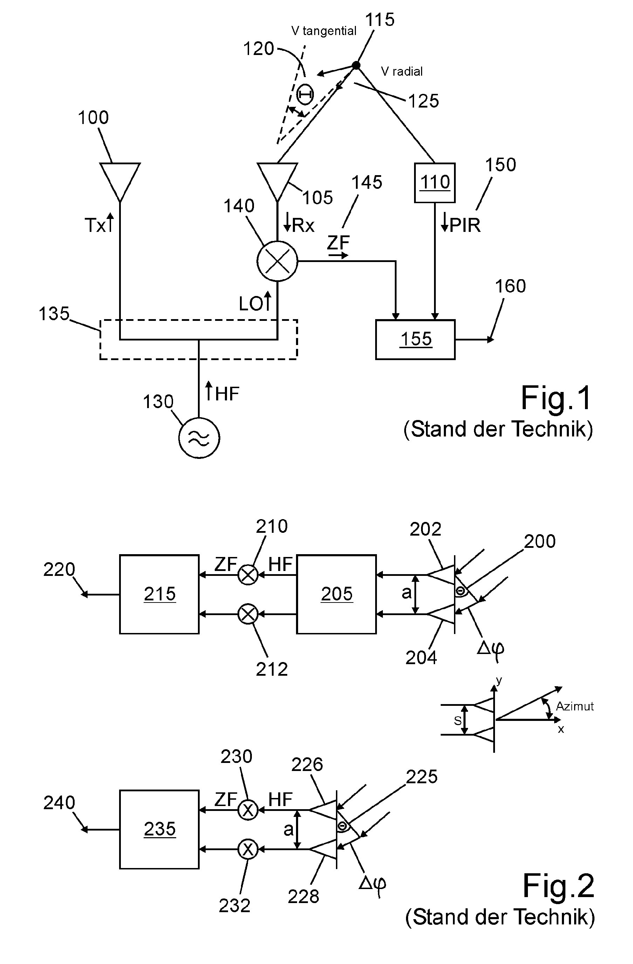

Da die Ursachen für Fehlalarme aufgrund der unterschiedlichen Detektionsprinzipien ebenfalls unterschiedlich sind, werden Radarsensoren bekanntermaßen auch mit den genannten PIR-Sensoren kombiniert. Solche kombinierten Bewegungssensoren sind kommerziell von vielen verschiedenen Anbietern erhältlich. Die Fig. 1 zeigt den prinzipiellen Aufbau eines solchen Bewegungssensors und illustriert den oben beschriebenen Stand der Technik.

Die Kombination von zwei oder mehreren Detektionsprinzipien in einem Sensor wird zusammen mit einer häufig recht aufwändigen Signalverarbeitung eingesetzt, weil die Anforderungen an Bewegungssensoren, insbesondere in Alarmsystemen, recht hoch sind. So müssen Bewegungssensoren eindringende Personen von Haustieren und anderen sich bewegenden Objekten unterscheiden können, um Fehlalarme zu vermeiden. Dazu werden spezielle und zum Teil recht umfangreiche Verfahren und Algorithmen zur Signalverarbeitung eingesetzt. Auch dürfen Bewegungssensoren nicht durch lokale Temperaturänderungen in ihrem Erfassungsbereich, z.B. aufgrund von sich einschaltenden Heizungen oder Änderungen der Sonneneinstrahlung, die nicht von einer vorgesehenen Temperaturkompensation erkannt werden können, einen Alarm auslösen. Gleichzeitig sind vor allem kombinierte PIR-Radar-Sensoren heute Massenprodukte, die zu sehr geringen Herstellungskosten produziert werden müssen, um marktfähig zu sein.

Soll zusätzlich die Winkelposition des Ziels aus der Phasendifferenz der Empfangssignale bestimmt werden, dann muss ein genannter IQ-Mischer verwendet werden, damit die Niedrigfrequenz-(NF-)Signale überhaupt eine messbare Phasenreferenz besitzen. Bei parallelen Empfangspfaden und moduliertem Sendesignal kann der Phasenbezug der Signale zueinander auch ohne einen IQ-Mischer mittels synchronen Abtastens der NF-Signale aller Empfangsantennen erhalten werden. Im Fall des Dauerstrichbetriebs der Quelle ohne Modulation und Beschränkung der Auswertung auf Dopplersignale müssen allerdings immer IQ-Mischer verwendet werden, um die Phasendifferenz vorzeichenrichtig zu erhalten, denn das Vorzeichen ist abhängig von der Bewegungsrichtung des zu sensierenden Objektes in Bezug auf den Bewegungssensor. Ansonsten wäre bei der Winkelbestimmung keine Unterscheidung zwischen einer Bewegung auf den Sensor zu oder vom Sensor weg und zwischen einer Position links oder rechts von der Mittelachse der jeweiligen Empfangsantenne möglich. Auch bei Auswertung des Amplitudenverhältnisses von Empfangsantennen, die eine gerichtete Strahlcharakteristik besitzen und in unterschiedliche Richtungen weisen, ist ein IQ-Mischer nicht notwendig. Dann entfällt allerdings auch wieder die Erkennung der Bewegungsrichtung.

Im Stand der Technik fmden sich weiterhin Radar-Bewegungssensoren, die auf der Basis von modulierten Signalen (z.B. Zwei-Frequenz-Umschaltung oder Puls-Doppler-Modulation) arbeiten. Im Gegensatz zur oben beschriebenen Abschaltfunktion wird in diesen Sensoren das Empfangssignal in einer Weise weiterverarbeitet, dass durch die Modulation zusätzliche Informationen über die Radarziele gewonnen werden können. In erster Linie liefern diese Sensoren neben initialer Detektion und Geschwindigkeitsinformation auch noch eine Abstandsinformation des detektierten Objekts. Damit sind sie in der Lage, nicht nur die Anwesenheit eines sich bewegenden Objekts zu detektieren, sondern können auch unbewegliche Objekte oder sogar mehrere Objekte gleichzeitig erkennen, die sich in verschiedenen Entfernungen vom Bewegungssensor befinden. Solche Bewegungssensoren werden beispielsweise in automatischen Türöffnern eingesetzt, häufig ohne kombinierten PIR-Sensor.

Es ist nun wünschenswert, einen beschriebenen Radar-Bewegungssensor um eine tangentiale Winkelbestimmung zu erweitern, wobei die beschriebenen im Stand der Technik vorhandenen Nachteile vermieden werden.

### Vorteile der Erfindung

Der vorliegenden Erfmdung liegt der Gedanke zugrunde, den Sendepfad und den Empfangspfad eines Radar-Bewegungssensors umzukehren und anstelle einer Sendeantenne und mehreren Empfangsantennen (welche die von der Sendeantenne abgestrahlten und vom Ziel reflektierten Signale empfangen) wenigstens zwei Sendeantennen und wenigstens eine Empfangsantenne vorzusehen, wobei zwischen den wenigstens zwei Sendeantennen eine Umschaltung eingesetzt wird.

Aufgrund der Reziprozität ergeben sich an der Empfangsantenne, in Abhängigkeit von der jeweiligen Sendeantenne, die gleichen Amplituden- und Phasenverhältnisse wie sie sich für mehrere Empfangsantennen und eine Sendeantenne ergeben würden, sofern der Aufbau der Antennen und die Abstände zueinander nicht verändert werden.

Die bevorzugt sequentielle Umschaltung wird deshalb durchgeführt, da die gleichzeitig abgestrahlten Signale der wenigstens zwei Sendeantennen miteinander interferieren würden und dadurch das Messsignal erheblich abgefälscht würde. Die Umschaltung auf der Sendeseite hat weiterhin den Vorteil, dass nur ein Signalpfad im Empfangszweig benötigt wird. Bei Verwendung von IQ-Mischern werden demnach pro Signalpfad vier Mischerdioden eingespart.

Die durch den Umschalter bedingten Signalverluste können durch eine Signalquelle mit höherer Ausgangsleistung oder durch einen der Quelle nachgeschalteten Verstärker relativ preisgünstig kompensiert werden, so dass die maximale im entsprechenden Frequenzbereich zugelassene Sendeleistung immer erreicht werden kann. Zudem ist die Umschaltung auf der Sendeseite von der Rauschbilanz her günstiger als eine Umschaltung zwischen den Empfangsantennen nach dem Stand der Technik und ermöglicht die Verwendung eines einfachen Umschalters in einem 2-kanaligen System mit Summen- und Differenz-Strahlkeulen, der preisgünstig durch einen Koppler gebildet werden kann. Im Gegensatz dazu würde ein äquivalenter Aufbau mit Strahlformung plus Umschaltung auf der Empfangsseite durch Fehlanpassung der Koppler-Eingänge in seinen Eigenschaften verschlechtert werden. Daher müssten entweder eine Parallelverarbeitung der Empfangssignale, d.h. ein zweiter Mischer und NF-Pfad, oder ein aufwändiger Umschalter eingesetzt werden, bei dem der jeweils abgeschaltete Kontakt zusätzlich mit einem schaltbaren Abschluss terminiert wird. Beide Maßnahmen würden zu höheren Kosten und höherem Platzbedarf führen.

Als Sendeantennen werden entweder gleichartige Antennen mit näherungsweise isotroper Charakteristik bevorzugt in der Azimut-Ebene eingesetzt oder eine oder mehrere Antennen verbunden mit einer Strahlformung. Die Winkelbestimmung erfolgt im ersten Fall bevorzugt über hochauflösende Winkelschätzverfahren, welche die Korrelationseigenschaften der Signale und des Rauschens an den Antennenelementen ausnutzen (z.B. MUSIC, und MODE), im zweiten Fall über Auswertung von Amplituden-/Leistungs- und/oder Phasenverhältnissen der Signale der Strahlkeulen.

Der erfindungsgemäße Aufbau des Bewegungssensors ist technisch einfach und daher preisgünstig realisierbar. Bevorzugt ist daher eine Realisierung mit nur zwei Sendeantennen vorgesehen.

Auf eine vorbeschriebene Modulation kann bei den hier betroffenen Bewegungssensoren üblicherweise verzichtet werden, da nur bewegte Objekte detektiert werden sollen. In hochwertigen Systemen für Anwendungen, die eine besonders hohe Sicherheit erfordern, wie bspw. bei der Überwachung von industriellen Objekten, Banken, Flughäfen, militärischen Einrichtungen, etc., kann das erfindungsgemäße Messprinzip aber auch im Zusammenhang mit modulierten Radarsignalen eingesetzt werden.

Der erfindungsgemäße Bewegungssensor lässt sich bevorzugt in Bewegungsmeldern zur Detektion von Personen oder Objekten bzw. deren Bewegung für unterschiedlichste Aufgaben eingesetzen, z.B. in Kraftfahrzeugen zur Erfassung bspw. eines vorausfahrenden Fahrzeugs, in Alarmanlagen als Sensoren für das Eindringen von Personen in geschützte Bereiche, als automatische Lichtschalter, als automatische Türöffner oder als automatische Schalter für Wasserhähne, Toilettenspülungen oder Händetrockner oder dgl.

### Zeichnung

Die Erfindung wird nachfolgend, unter Bezugnahme auf die beigefügte Zeichnung, anhand von Ausführungsbeispielen eingehender beschrieben, aus denen weitere Merkmale und Vorteile der Erfindung hervorgehen.

In der Zeichnung zeigen im Einzelnen
- Fig. 1: den prinzipiellen Aufbau eines kombinierten PIR/Radar-Bewegungssensors gemäß dem Stand der Technik;
- Fig. 2: zwei schematische Darstellungen der Signalauswertung bei einem Radar-Bewegungssensor zur Illustration zweier unterschiedlicher Prinzipien zur Auswertung der Messsignale gemäß dem Stand der Technik;
- Fig. 3a,b: den prinzipiellen Aufbau zweier Ausführungsformen eines Radar-Bewegungssensors gemäß dem Stand der Technik;
- Fig. 4: den prinzipiellen Aufbau eines erfindungsgemäßen Radar-Bewegungssensors;
- Fig. 5: den prinzipiellen Aufbau eines erfindungsgemäßen Radar-Bewegungssensors mit analoger Strahlformung mittels eines strahlformenden Elementes;
- Fig. 6: den prinzipiellen Aufbau eines erfindungsgemäßen Radar-Bewegungssensors mit analoger Strahlformung auf der Grundlage von Summen- und Differenz-Strahlkeulen über ein strahlformendes Element;
- Fig. 7a-c: drei unterschiedliche Realisierungsmöglichkeiten des erfindungsgemäßen Aufbaus mit Summen-/Differenz-Strahlkeulen im Sendepfad nach Fig. 6; und
- Fig. 8: ein "holografisches" Konzept für das Radar-Frontend eines erfindungsgemäßen Bewegungssensors.

### Beschreibung von Ausführungsbeispielen

In der Fig. 1 ist der prinzipielle Aufbau eines kombinierten PIR/Radar-Bewegungssensors gemäß dem Stand der Technik gezeigt. Der Bewegungssensor umfasst eine im Transmit Mode 'Tx' betriebene Radar-Sendeantenne 100 sowie zwei Empfangseinheiten 105, 110, wobei es sich bei der einen um eine im Receive Mode 'Rx' betriebene Radar-Empfangsantenne 105 und um einen Passiv-Infrarot (PIR) Empfänger 110 handelt, welcher das von einem Zielobjekt 115 abgestrahlte Infrarotlicht erfasst. Das Zielobjekt 115 bewege sich in dem Beispiel sowohl mit einer tangentialen Komponente v_tangential 120 als auch einer radialen Komponente v_radial 125. Wie bereits erwähnt, zielt die vorliegende Erfindung insbesondere auf die Messung der tangentialen Winkelposition Θ 120 ab.

Die beiden Radar-Antennen 100, 105 werden von einer Hochfrequenz-(HF-)Quelle 130 gespeist. Die HF-Quelle 130 liefert in dem Ausführungsbeispiel ein Dauerstrichsignal. An einem Verzweigungspunkt 135 findet in an sich bekannter Weise eine Tx/LO(Lokaloszillator)-Aufteilung statt. Der Verzeigungspunkt 135 wird beispielsweise durch einen T-Teiler oder Wilkinson-Teiler realisiert. Von dem von der Radar-Empfangsantenne 105 empfangenen Signal wird mittels eines Mischers 140 eine Zwischenfrequenz ZF 145 ausgekoppelt, welche das eigentliche Doppler-Signal, und zwar ggf. eine In-Phase- und eine Quadraturkomponente umfassend, darstellt.

Das Signal ZF und das vom PIR gelieferte Signal PIR 150 werden einer Auswerteeinheit 155 zugeführt, welche ein Steuer- oder Alarmsignal 160 ausgibt, je nach Anwendung ein Signal "Alarm auslösen", "Licht einschalten", oder dgl.

Die Fig. 2 illustriert zwei Prinzipien der Winkelauswertung anhand einer typischen Erweiterung des Radarfrontends eines Radar-Bewegungssensors auf zwei oder mehrere Antennenelemente mit Frequenzumsetzung und Auswertung der Empfangssignale zur Ermittlung der azimutalen Winkelposition des jeweiligen Zielobjekts. Der Phasenunterschied Δϕ zwischen den Signalen der Antennenelemente, der sich aus dem verzögerten Einfall der elektromagnetischen Welle in Abhängigkeit vom Azimutwinkel Θ ergibt, wird letztlich für die Winkelauswertung verwendet. Das obere Teilbild zeigt die Auswertung der Signale von Strahlkeulen mittels "analoger" Strahlformung. Die Strahlkeulen werden dabei über ein strahlformendes Element gebildet und ggf. z.B. über Phasenschieber geschwenkt. Das rechts zwischen den beiden Teilbildern eingefügte dritte Teilbild zeigt die Definition des genannten Azimut-Winkels. Die Strahlformung an sich erfolgt bevorzugt durch Bildung von Summen- und/oder Differenzsignalen der mit jeweils gleichen oder unterschiedlichen Phasen- und Amplitudenfaktoren gewichteten Strahlkeulen wenigstens zweier Sendeantennen.

Die hier dargestellte einstrahlende ebene Welle mit einer Wellenfront 200 fällt unter dem gezeigten Azimutwinkel Θ ein, wobei sich ein gezeigter Phasenunterschied Δϕ ergibt. Die einfallende Welle 200 trifft vorliegend auf zwei Antennenelemente 202, 204 auf, welche in einem Abstand a angeordnet sind. Die von den Antennenelementen 202, 204 gelieferten Signale werden zunächst einer ersten Funktionseinheit 205 zugeführt, welche in an sich bekannter Weise eine genannte Strahlformung und Strahlschwenkung vornimmt. Aus den von der ersten Funktionseinheit 205 gelieferten HF-Signalen der einzelnen Strahlkeulen wird mittels einer entsprechenden Anzahl von Mischern 210, 212 die genannte Zwischenfrequenz ZF für jede Strahlkeule ausgekoppelt. Eine zweite Funktionseinheit 215 führt nun in ebenfalls an sich bekannter Weise eine Auswertung anhand des Verhältnisses der Signale der Strahlkeulen oder nach einem Winkelschätzverfahren durch. Als Ergebnis 220 dieser Auswertung liegt schließlich die Winkelposition des Zielobjektes als Azimutwinkel vor.

Bei der "analogen" Strahlformung werden demnach mittels einer Gruppenantenne über ein strahlformendes Element eine Mehrzahl von Strahlkeulen ausgebildet. Üblicherweise besitzt das strahlformende Element, z.B. eine Rotman-Linse, Butler-Matrix oder Blass-Matrix, mehrere mit den Strahlkeulen korrespondierende Eingänge. Eine andere Realisierungsmöglichkeit ist ein Leistungsteiler mit Phasenschiebern, wobei nur eine Strahlkeule ausgebildet wird, die in Abhängigkeit von den Zuständen der Phasenschieber in ihrer Winkelausrichtung geschwenkt wird. Weiterhin ist es auch möglich, für jede Strahlkeule eine eigene Antenne zu verwenden oder als strahlformendes Element eine dielektrische Linse o.ä. einzusetzen. Die Strahlkeulen werden so ausgelegt, dass sie in unterschiedliche azimutale Richtungen zeigen und dass eine Uberlappung benachbarter Strahlkeulen auftritt. Im Überlappungsbereich der Strahlkeulen lässt sich die azimutale Winkelposition des Zielobjektes aus dem Amplituden- oder Leistungsverhältnis der Signale in benachbarten Strahlkeulen bestimmen. Weiterhin kann auch eine Auswertung der Phasen der Signale oder eine kombinierte Auswertung von Amplituden (oder Leistungen) und Phasen erfolgen.

Das untere Teilbild in der Fig. 2 dagegen zeigt die Auswertung der Signale von einzelnen Artennenelementen mittels "digitaler" Strahlformung. Eine einfallende ebene Welle 225 trifft wiederum auf zwei Antennenelemente 226, 228 auf, welche wiederum in einem Abstand a angeordnet sind. Die von den beiden Antennenelementen 226, 228 gelieferten Signale werden zunächst zwei Mischern 230, 232 zugeführt, wobei die genannte Zwischenfrequenz ZF für jedes Antennenelement 226, 228 ausgekoppelt wird. Die ZF-Signale werden einer Funktionseinheit 235 zugeführt, welche eine Phasenauswertung und/oder eine digitale Strahlformung und/oder eine digitale Strahlschwenkung vornimmt oder das Eingangssignal mittels eines hochauflösenden Winkelschätzverfahrens auswertet. Als Ergebnis 240 dieser Auswertung liegt wiederum die Winkelposition des Zielobjekts als Azimutwinkel vor.

Bei der "digitalen" Strahlformung werden demnach als Signale insbesondere Phasendifferenzen von einzelnen Elementen oder Gruppen von Antennenelementen separat verarbeitet und ausgewertet. Die Signale können auf verschiedene Art und Weise ausgewertet werden. Zunächst ist es möglich, die gleichen Verfahren wie bei der "analogen' Strahlformung/Strahlschwenkung auch "digital" zu implementieren, z.B. das Schwenken einer Strahlkeule im Winkel mit Maximumsuche (bspw. mittels eines bekannten Bartlett-Beamformers) oder das Ausbilden mehrere Strahlkeulen an festen Winkelpositionen und die Auswertung der Amplituden/Phasenverhältnisse. Außerdem können auf den Signalen der Einzelelemente leistungsfähigere DOA- ("direction of arrival") Algorithmen aufsetzen, wie z.B. das an sich bekannte "Null-Steering" oder die Verwendung hochauflösender Winkelschätzverfahren (z.B. 'MUSIC', 'ESPRIT'). Bei diesen Winkelschätzverfahren zur Bestimmung des Einfallswinkels der Signale von einer oder mehreren Quellen an einer Gruppenantenne werden bekanntermaßen insbesondere die Korrelationseigenschaften der Signale und des Rauschens an den Antennenelementen ausgenutzt.

Wenn eine Phasenauswertung der Empfangssignale zur Winkelbestimmung verwendet wird, wie bei der "digitalen Strahlformung", dann muss wegen der Signalumschaltung ein IQ-Mischer eingesetzt werden, um eine Phasenreferenz des Mischsignals auf den LO zu erhalten. Bildet man daraus in an sich bekannter Weise ein Einseitenband-Spektrum, so erhält man die Dopplerfrequenz-Linie δ(Δf)e^{jϕ} mit einem Phasenfaktor. Die Phase ϕ setzt sich bekanntermaßen aus Anteilen zusammen, die von der Entfernung und der azimutalen Winkellage abhängen. Die Umschaltung zwischen den Antennenelementen muss so schnell erfolgen, dass sich der Entfernungsanteil der Phase nur in vernachlässigbarer Weise ändert. Aus der Phasendifferenz Δϕ = ϕ₁ - ϕ₂ der Signale zweier benachbarter Empfangsantennen (Fig. 2 unten) kann man die Winkelablage aus der Formel Θ=arcsin(λ/aΔϕ/2π) berechnen.

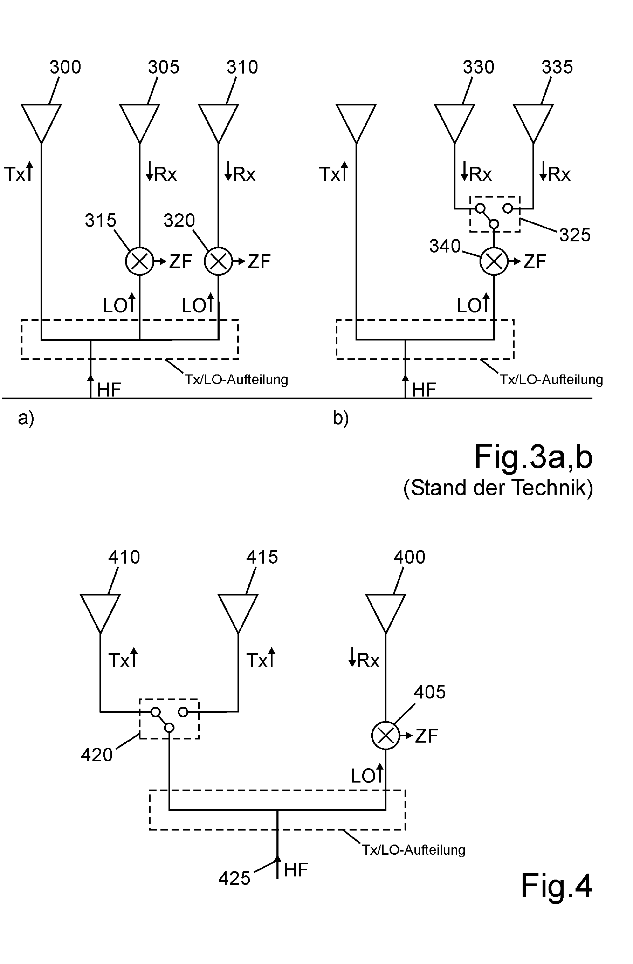

Der prinzipielle Aufbau eines Antennenfrontends nach dem Stand der Technik (DE 102 34 291 A1) wird nun anhand der beiden in der Figuren 3a und 3b dargestellten Ausführungsformen beschrieben. In der Fig. 3a wird über eine Sendeantenne 300 der zu überwachende Bereich bestrahlt. Das vom Zielobjekt reflektierte Signal wird über vorliegend zwei Empfangsantennen 305, 310 empfangen. Die Signale der Empfangsantennen 305, 310 werden über Mischer 315, 320 (ggf. mit Vorverstärker) und eine (nicht gezeigte) Signalverarbeitung der Zwischenfrequenz/Basisbandsignale schließlich digitalisiert und der Winkelbestimmung (siehe Figuren 1 und 2) zugeführt. Dabei werden sowohl Einzelelemente mit näherungsweise isotroper Antennencharakteristik sowie auch Antennen, die jeweils nur eine Strahlkeule ausbilden, eingesetzt. In Fig. 3b ist zusätzlich eine Umschaltung 325 zwischen den zwei Empfangsantennen 330, 335 vorgesehen. Dadurch wird nur ein einziger Mischer-/Zwischenfrequenzpfad 340 benötigt.

Die Fig. 4 zeigt eine erfindungsgemäße Realisierung des Antennenfrontends eines winkelgebenden Radar-Bewegungssensors. Empfangsseitig ist nur eine Empfangsantenne 400 mit einem Mischer- und Signalverarbeitungspfad 405 vorgesehen. Dafür werden sendeseitig mehrere (vorliegend zwei) Sendeantennen 410, 415 eingesetzt, zwischen denen mittels eines Umschalters 420 umgeschaltet wird. Als Sendeantennen 410, 415 können Einzelelemente mit näherungsweise isotroper Antennencharakteristik ("digitale" Strahlformung) oder Antennen, die jeweils nur eine Strahlkeule ausbilden ("analoge" Strahlformung), verwendet werden.

Die Verluste des Umschalters 420 können im erfindungsgemäßen Aufbau gemäß Fig. 4 relativ einfach durch eine höhere Ausgangsleistung der HF-Quelle 425 oder ggf. durch einen Verstärker kompensiert werden, so dass die von der jeweiligen Frequenzzulassung spezifizierte maximale abgestrahlte Leistung erreicht wird. Damit ist die Rauschbilanz des erfmdungsgemäßen Aufbaus günstiger als die eines äquivalenten Aufbaus nach dem Stand der Technik gemäß Fig. 3b. Wenn man annimmt, dass an der Empfangsantenne 400 das Signal-Rauschverhältnis (S/N) vom von der Antenne 400 empfangenen thermischen Umgebungsrauschen dominiert wird, ergibt sich die Verschlechterung des S/N direkt aus der Rauschzahl des Umschalters 420, die wiederum mindestens gleich dem ohmschen Verlustfaktor des Umschalters 420 ist. In einem preisgünstigen Bewegungssensor, der im Frequenzbereich von 10 GHz arbeitet, lässt sich ein einfacher Umsehalter mit Bipolar- oder Feldeffekttransistoren oder pin-Dioden realisieren, so dass Verluste in einer Größenordnung von etwa 2-3 dB auftreten. Damit verschlechtert sich das S/N des äquivalenten Aufbaus nach dem Stand der Technik (Fig. 3b) entsprechend um 2-3 dB gegenüber dem erfindungsgemäßen Aufbau gemäß Fig. 4.

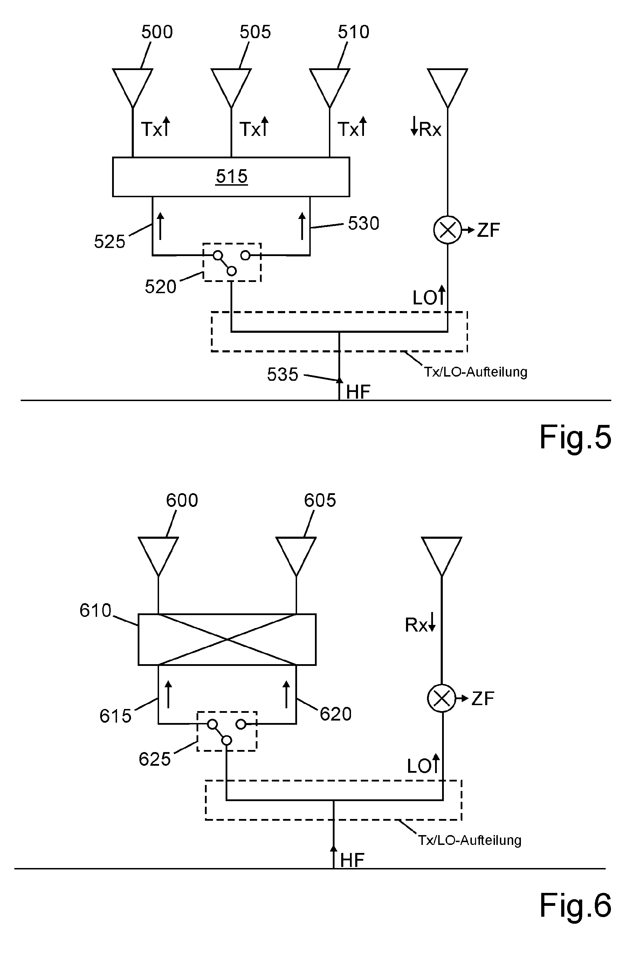

Ein weiteres Ausführungsbeispiel des erfindungsgemäßen Bewegungssensors zeigt die Fig. 5. Der Bewegungssensor umfasst in diesem Ausführungsbeispiel drei Sendeantennen 500 - 510, welche mit einem strahlformenden Element 515 verbunden sind. Das strahlformende Element 515 ermöglicht eine "analoge" Strahlformung. Die Strahlformung erfolgt beispielsweise mittels eines strahlformenden Funktionselementes 515, mit dem die wenigstens zwei Sendeantennen 500 - 510 zusammenwirken, wobei für jede Strahlkeule ein eigenes Eingangstor des strahlformenden Funktionselements verwendet wird. Das jeweilige strahlformende Funktionselement 515 kann durch einen Koppler, eine planare Linsenstruktur und eine bereits genannte Butler- oder Blass-Matrix gebildet sein. In einer anderen Ausgestaltung kann das strahlformende Funktionselement 515 auch durch eine dielektrische Linse gebildet sein, als deren Eingangstore eigene Sendeantennen für jede Strahlkeule verwendet werden.

Mittels eines Dreifachumschalters 520 wird zwischen den möglichen Strahlkeulen der Sendeantennen 500 - 510 bevorzugt sequentiell umgeschaltet. Die Anzahl der Strahlkeulen hängt von der Anwendung des Bewegungssensors ab, typisch sind es zwei bis ca. zehn. In Fig. 5 sind beispielhaft zwei Strahlkeulen 525, 530 gezeigt. Die Anzahl der Antennenelemente (in der Fig. 5 drei) ist normalerweise größer oder gleich der Anzahl der erwünschten Strahlkeulen. Auch hier können die Verluste des Umschalters 520 und des strahlformenden Elements 515 wieder durch die HF-Quelle 535 bzw. durch einen (nicht gezeigten) Verstärker kompensiert werden und wirken sich daher nicht auf das S/N aus, wie es in einen äquvalenten Aufbau nach Stand der Technik (Strahlformung und Umschaltung auf der Empfangsseite) der Fall wäre.

Eine besonders einfache Strahlformung besteht aus der Bildung der Summe und der Differenz der Strahlkeulen zweier Sendeantennenelemente 600, 605, wie in der Fig. 6 gezeigt. Die beiden Antennenelemente 600, 605 werden mittels eines summen- und differenzbildenden Funktionsmoduls 610 betrieben. Das Funktionsmodul 610 wird sowohl von einem Differenzsignal 615 als auch einem Summensignal 620 gespeist, wobei mittels eines Umschalters 625 zwischen diesen beiden Funktionsmodi umgeschaltet wird. In dieser Ausgestaltung ist eine einfache und damit besonders vorteilhaft auf einfachen Mikrocontrollern (oder als Analogschaltung) implementierbare Winkelauswertung über das an sich bekannte "Monopuls-Verfahren" (z.B. M. I. Skolnik, Introduction to Radar Systems, 2nd ed. McGraw-Hill Int. Editions, Singapore 1980, pp. 160-167) möglich. Prinzipiell handelt es sich hier wieder um eine Strahlformung, daher gelten auch hier die vorhergehend beschriebenen Vorteile gegenüber dem Stand der Technik. Die Realisierung der Summen-/Differenzbildung ist vorliegend besonders einfach.

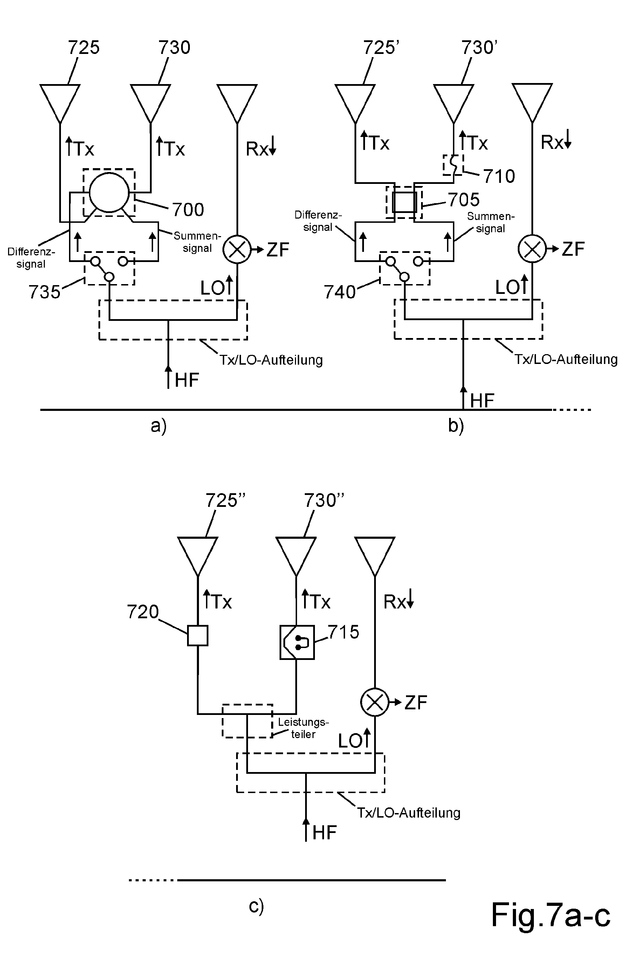

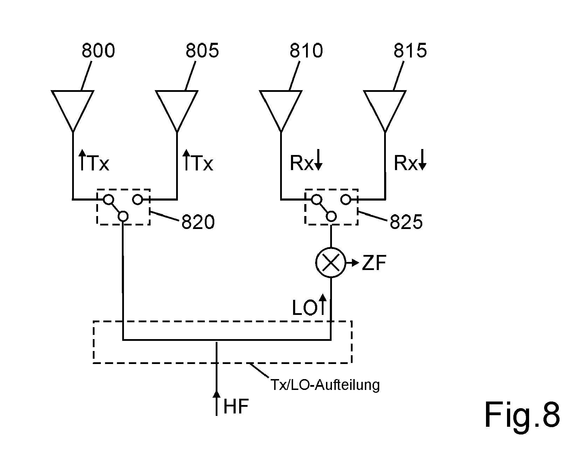

Drei mögliche Ausführungsbeispiele der Summen-/Differenzbildung zeigen die Figuren 7a - 7c. Entweder wird wie in der Fig. 7a ein 180°-Koppler 700 oder ein 90°-Koppler 705 (Fig. 7b) mit zusätzlicher Phasenverzögerung 710 verwendet, oder in einem Zweig wird ein 180°-Phasenschieber 715 eingesetzt (Fig. 7c). Die Verluste des Phasenschiebers 715 können mittels eines Dämpfungsglieds 720 im jeweils anderen Zweig ausgeglichen werden, so dass beide Antennenelemente 725, 730 mit der gleichen Leistung abstrahlen. Ein weiterer Vorteil zeigt sich bei Betrachtung des jeweiligen Umschalters 735, 740. Man kann zeigen, z.B. mit Hilfe einer Schaltungssimulation, dass der abgeschaltete Eingang der Koppler 700, 705 jeweils offen, d.h. elektrisch leerlaufend, gelassen werden kann. Obwohl der jeweilige Koppler 700, 705 dann an seinem isolierten Port nicht abgeschlossen ist, ändert sich sein Verhalten für die Signalfluss-Richtung nicht, lediglich die Anpassung von den Sendeantennen 725, 730 in den jeweiligen Koppler 700, 705 hinein gesehen verschlechtert sich, was jedoch keine Rolle spielt. Hingegen müssen in einem äquivalenten Aufbau mit Summen/Differenzbildung im Empfangspfad nach dem Stand der Technik (z.B. vorgenannter Artikel von M. I. Skolnik, dortige Fig. 8) beide Ausgänge des jeweiligen Kopplers 700, 705, an denen Summen- und Differenzsignal abgegriffen werden, abgeschlossen werden, um eine gute Anpassung der Eingänge zu gewährleisten. Dies kann entweder durch parallele Mischer- und Signalverarbeitungspfade oder durch einen Umschalter mit integrierten, schaltbaren Terminierungen realisiert werden. Ein solcher Umschalter ist allerdings vergleichsweise komplex aufgebaut und daher kostspielig.

In der Fig. 8 ist schließlich eine Ausführungsform des erfindungsgemäßen Bewegungssensors gezeigt, bei der das in der EP 987561 A2 beschriebene holografische Konzept in einem Bewegungssensor mit Winkeldetektion und "digitaler" Strahlformung vorteilhaft eingesetzt wird. In diesem Ausführungsbeispiel sind jeweils mehrere (n) Sendeantennen 800, 805 (n vorliegend gleich 2) und mehrere (m) Empfangsantennen 810, 815 (m vorliegend gleich 2) angeordnet. Mittels jeweils angeordneter Umschalter 820, 825 wird eine Umschaltung sowohl zwischen den beiden Sendeantennen 800, 805 als auch zwischen den beiden Empfangsantennen 810, 815 durchgeführt. Man erreicht damit eine effektive Apertur, die einer Empfangsantenne mit m·n Elementen entspricht. Ein solches Konzept ist dann vorteilhaft, wenn eine größere Anzahl von Antennenelementen eingesetzt werden soll, um ein Radarsystem mit hoher Winkelauflösung und ggf. auch hoher Reichweite zu realisieren, z.B. zur Uberwachung von Sicherheitsbereichen, wie z.B. von Flughäfen, militärischen Bereichen, Atom- oder Chemieanlagen usw.

Die vorbeschriebenen Antennenfrontends lassen sich sowohl in einfachen Radar-Bewegungsmeldem einsetzen, welche mit Dauerstrichsignalen arbeiten, sowie in komplexeren Systemen, in denen modulierte Signale eingesetzt werden. Weiterhin lassen sich Radar-Bewegungssensoren mit PIR-Bewegungssensoren in der genannten Weise kombinieren.

## Patentansprüche

1. Bewegungssensor zur elektromagnetischen Erfassung der Bewegung eines Objektes, insbesondere zur Erfassung einer Winkelposition des zu erfassenden Objektes (115) relativ zum Standort und/oder zur Ausrichtung des Bewegungssensors (120), mit einem aus wenigstens einer Sendeantenne (100) und wenigstens einer Empfangsantenne (105, 110) gebildeten Antennenfrontend, **dadurch gekennzeichnet, dass** das Antennenfrontend durch wenigstens zwei Sendeantennen (410, 415) zur Abstrahlung wenigstens zweier elektromagnetischer Wellen, durch wenigstens eine Empfangsantenne (400) zur Detektion wenigstens einer von dem zu erfassenden Objekt (115) reflektierten elektromagnetischen Welle (200, 225) und durch Umschaltmittel (420) zur Umschaltung des Betriebs zwischen den wenigstens zwei Sendeantennen (410, 415) gebildet ist.

2. Bewegungssensor nach Anspruch 1, **dadurch gekennzeichnet, dass** das Antennenfrontend nur eine Empfangsantenne (400) zur Detektion einer von dem zu erfassenden Objekt (115) reflektierten elektromagnetischen Welle (200, 225) aufweist.

3. Bewegungssensor nach Anspruch 1, **dadurch gekennzeichnet, dass** das Antennenfrontend zwei Sendeantennen (800, 805) zur Abstrahlung zweier elektromagnetischer Wellen und zwei Empfangsantennen (810, 815) zur Detektion wenigstens zweier von dem zu erfassenden Objekt (115) reflektierten elektromagnetischen Wellen (200, 225) aufweist.

4. Bewegungssensor nach einem der vorhergehenden Ansprüche, **dadurch gekennzeichnet, dass** zwischen den wenigstens zwei Sendeantennen (410, 415) sequenziell umgeschaltet wird.

5. Bewegungssensor nach einem der vorhergehenden Ansprüche, **gekennzeichnet durch** Mittel (720) zur Kompensation von **durch** die Umschaltmittel (420) bedingten Signalverlusten.

6. Bewegungssensor nach einem der vorhergehenden Ansprüche, **dadurch gekennzeichnet, dass** die wenigstens zwei Sendeantennen (410, 415) durch gleichartige Antennen mit näherungsweise isotroper Abstrahlcharakteristik, bevorzugt in der Azimut-Ebene, gebildet sind.

7. Bewegungssensor nach einem der Ansprüche 1 bis 5, **dadurch gekennzeichnet, dass** die wenigstens zwei Sendeantennen (410, 415) durch unterschiedlich aufgebaute oder unterschiedlich ausgerichtete, ansonsten gleichartige Antennen mit unterschiedlich gerichteter Abstrahlcharakteristik, bevorzugt in der Azimut-Ebene, gebildet sind.

8. Bewegungssensor nach einem der vorhergehenden Ansprüche, **gekennzeichnet durch** ein strahlformendes Funktionselement (515), mit dem die wenigstens zwei Sendeantennen (500 - 510) zusammenwirken, wobei für jede Strahlkeule ein eigenes Eingangstor des strahlformenden Funktionselements verwendet wird.

9. Bewegungssensor nach Anspruch 8, **dadurch gekennzeichnet, dass** das strahlformende Funktionselement (515) durch einen Koppler, eine planare Linsenstruktur und eine Butler- oder Blass-Matrix gebildet ist.

10. Bewegungssensor nach Anspruch 8, **dadurch gekennzeichnet, dass** das strahlformende Funktionselement (515) durch eine dielektrische Linse gebildet ist, als deren Eingangstore eigene Sendeantennen für jede Strahlkeule verwendet werden.

11. Bewegungssensor nach Anspruch 8, **dadurch gekennzeichnet, dass** das strahlformende Funktionselement (515) durch einen Leistungsteiler mit wenigstens einem Phasenschieber gebildet ist, wobei nur eine Strahlkeule ausgebildet wird, die in Abhängigkeit von den Zuständen des wenigstens einen Phasenschiebers in ihrer Winkelausrichtung geschwenkt wird.

12. Bewegungssensor nach einem der vorhergehenden Ansprüche, **gekennzeichnet durch** Rechenmittel zur Winkelbestimmung mittels eines Winkelschätzverfahrens.

13. Bewegungssensor nach einem der Ansprüche 1 bis 11, **gekennzeichnet durch** Rechenmittel zur Winkelbestimmung mittels Auswertung von Amplituden-und/oder Leistungs- und/oder Phasenverhältnissen der Signale der Strahlkeulen.

14. Verfahren zum Betrieb eines Bewegungssensors gemäß einem der vorhergehenden Ansprüche, **dadurch gekennzeichnet, dass** die Winkelbestimmung mittels eines hochauflösenden Winkelschätzverfahrens erfolgt, das insbesondere die Korrelationseigenschaften der Signale und des Rauschens an den Antennenelementen ausnutzt.

15. Verfahren zum Betrieb eines Bewegungssensors gemäß einem der Ansprüche 1 bis 13, **dadurch gekennzeichnet, dass** die Strahlkeulen der wenigstens zwei Sendeantennen so ausgelegt werden, dass die Strahlkeulen in unterschiedliche azimutale Richtungen zeigen und dass eine Uberlappung benachbarter Strahlkeulen auftritt, wobei im Überlappungsbereich der Strahlkeulen die azimutale Winkelposition des Objektes aus dem Amplituden- und/oder Leistungs- und/oder Phasenverhältnis der Signale der Strahlkeulen erfolgt.

16. Verfahren nach Anspruch 14 oder 15, **dadurch gekennzeichnet, dass** eine Strahlformung durchgeführt wird, wobei Summen- und/oder Differenzsignale der mit jeweils gleichen oder unterschiedlichen Phasen- und Amplitudenfaktoren gewichteten Strahlkeulen wenigstens zweier Sendeantennen gebildet werden.

17. Verfahren nach einem der Ansprüche 14 bis 16, **dadurch gekennzeichnet, dass** die Umschaltung zwischen den wenigstens zwei Sendeantennen so schnell erfolgt, dass sich der Entfernungsanteil der Phase nur in vernachlässigbarer Weise ändert.
